# EUROPÄISCHE PATENTSCHRIFT

(11) **EP 2 626 671 B1**
(45) Veröffentlichungstag und Bekanntmachung des Hinweises auf die Patenterteilung: **14.09.2016**
(21) Anmeldenummer: 12000886.7
(22) Anmeldetag: 10.02.2012
(51) Int. Cl.: G05D 1/02, G01D 5/245, G01D 5/244, G01D 5/347

(54) **Vorrichtung und Verfahren zur Positionsbestimmung**
Device and method for positioning
Dispositif et procédé de détermination de position

(43) Veröffentlichungstag der Anmeldung: 14.08.2013
(73) Patentinhaber: SICK STEGMANN GmbH, 78166 Donaueschingen (DE); Atlantic Zeiser GmbH, 78576 Emmingen (DE)
(72) Erfinder: Basler, Stefan, 78086 Brigachtal (DE); Stewart, Trevor, 78343 Gaienhofen (DE); Wohlfahrt, Karl-Heinz, 78351 Bodman-Ludwigshafen (DE)
(74) Vertreter: Manitz, Finsterwald & Partner GbR

(56) Entgegenhaltungen:
- EP-A1- 1 420 229
- EP-A1- 1 517 119
- EP-A2- 1 617 173
- WO-A1-2005/023688
- DE-U1- 29 520 515
- DE-U1-202006 012 637
- US-A- 4 566 032
- US-A1- 2011 007 155
- ANONYMOUS: 'Agilent ADNS-2030 Low Power Optical Mouse Sensor Data Sheet' 06 Mai 2003, XP055085617
- JUNGUK CHO ET AL: 'A Real-Time Histogram Equalization System with Automatic Gain Control Using FPGA', [Online] 01 August 2010, XP055164755 DOI: 10.3837/tiis.2010.08.0011 Gefunden im Internet: <URL:http://www.itiis.org/tiis/download.jsp ?filename=TIIS_Vol4No4P11August2010.pdf> [gefunden am 2015-01-26]

## Beschreibung

Die vorliegende Erfindung betrifft eine Fördereinrichtung.

Bei Fördereinrichtungen besteht allgemein das Bestreben, die Position eines Transportguts zu bestimmen.

Es sind Vorrichtungen zur Positionsbestimmung bekannt, welche umfassen: eine relativ zu einer Oberfläche zu bewegende optische Abtasteinheit, die einen Bildsensor zum Erfassen von Lichtintensitätsmustern von Licht, das von der Oberfläche reflektiert wird, umfasst, und eine dem Bildsensor zugeordnete elektronische Recheneinheit, die dazu ausgebildet ist, aus einem Unterschied zwischen zeitlich nacheinander erfassten Lichtintensitätsmustern einen zurückgelegten Verfahrweg und/oder eine Verfahrgeschwindigkeit der optischen Abtasteinheit relativ zu der Oberfläche zu bestimmen, wobei die oder eine weitere Recheneinheit dazu ausgebildet ist, ein Aussteuerungssignal zu erzeugen, welches mit der Intensität des von der Oberfläche reflektierten Lichts korreliert.

Derartige Vorrichtungen zur Positionsbestimmung dienen beispielsweise dazu, die Position eines beweglichen Maschinenteils relativ zu einem ortsfesten Rahmen oder die Position eines Fahrzeugs auf einer Transportstrecke zu ermitteln. Auch Längenmessungen können mit Vorrichtungen der genannten Art durchgeführt werden. Um eine exakte Bestimmung des Verfahrwegs oder der Verfahrgeschwindigkeit zu ermöglichen, kann die Oberfläche in spezieller Weise strukturiert sein. Dies ist jedoch nicht zwingend erforderlich, da viele Oberflächen von vornherein geringfügige Variationen aufweisen, welche zum Erzeugen eines verwertbaren Lichtintensitätsmusters auf dem Bildsensor ausreichen. Dementsprechend kann es sich bei der Oberfläche um eine beliebige, das Licht direkt oder diffus reflektierende Fläche an einem Objekt handeln, wobei insbesondere ebene Flächen in Betracht kommen. Beispielsweise kann die optische Abtasteinheit an einer Messschiene entlang, über eine Platte hinweg oder auch einfach über den Boden bewegt werden. Solche Messvorrichtungen werden auch als optische Positionsgeber oder optische Encoder bezeichnet.

Das Aussteuerungssignal kann dazu verwendet werden, verschiedene Systemkomponenten derart anzupassen oder einzustellen, dass der Bildsensor und/oder die Recheneinheit in einem günstigen Bereich arbeiten, sodass die Vorrichtung an Oberflächen mit stark unterschiedlichem bzw. wechselndem Reflexionsgrad, also z.B. sowohl an weißen als auch an schwarzen Oberflächen, einsetzbar ist.

Die Auswertung eines Unterschieds zwischen zeitlich nacheinander erfassten Lichtintensitätsmustern erlaubt naturgemäß lediglich eine inkrementelle Positionsbestimmung, d.h. es können im Prinzip nur Positionsänderungen erfasst werden. Um die absolute Position zu ermitteln, ist zusätzlich ein Abgleich mit einem geeigneten Referenzwert oder Nullwert erforderlich. Dies kann beispielsweise durch Vorsehen von mechanischen Endschaltern am Beginn und am Ende der Verfahrstrecke erfolgen. Allerdings ist dies mit einem relativ hohen Herstellungs- und Installationsaufwand verbunden.

In der EP 1 517 119A1 ist eine Vorrichtung zum Detektieren der Position eines medizinischen Instruments innerhalb einer Kanüle oder eines Blutgefäßes offenbart. Mittels einer optischen Abtasteinheit wird das von der Oberfläche des Instruments reflektierte Licht detektiert. Durch Vergleich aufeinander folgender Bildmuster kann eine inkrementelle Positionsbestimmung erfolgen.

Die WO 2005/023688 A1 offenbart eine Förderanlage mit einem Bandförderer und einer Überwachungsvorrichtung. Die Überwachungsvorrichtung umfasst eine Kamera und einen Encoder und dient dazu, auf das Band des Bandförderers aufgebrachte Markierungen auszulesen.

In der US 2011/0007155 A1 ist eine Förderanlage offenbart, die mit einem Bildverarbeitungssystem ausgestattet ist. Das Bildverarbeitungssystem erkennt Markierungen, die auf einem zu transportierenden Objekt aufgebracht sind, und ermittelt daraus die Position des Objekts.

Es ist eine Aufgabe der Erfindung, das Transportieren von Objekten mittels Fördereinrichtungen zu verbessern.

Die Lösung der Aufgabe erfolgt durch eine Fördereinrichtung mit den Merkmalen des Anspruchs 1.

Bei einer erfindungsgemäßen Fördereinrichtung kann es sich beispielsweise um einen Band- oder Riemenförderer handeln, auf dessen Auflagefläche in bestimmten, bevorzugt regelmäßigen Abständen graphische Codemuster aufgebracht sind. Die Codemuster können bestimmte Orte innerhalb der Auflagefläche markieren oder Angaben zu den geförderten Objekten beinhalten. Durch Lesen der Codes kann die Fördereinrichtung daher besser koordiniert werden.

Erfindungsgemäß ist dem Bildsensor eine Auswertungseinrichtung zugeordnet, die dazu ausgebildet ist, anhand des Aussteuerungssignals ein auf der Oberfläche befindliches graphisches Codemuster zu erkennen und eine Information aus dem Codemuster auszulesen, wobei ein Regler vorgesehen ist, welcher das Aussteuerungssignal als Stellsignal zur Regelung eines Verstärkungsfaktors eines Eingangsverstärkers der Recheneinheit der optischen Abtasteinheit oder zur Regelung eines Verstärkungsfaktors eines die Leistung einer Lichtquelle der optischen Abtasteinheit anpassenden Ausgangsverstärkers verwendet.

Das Aussteuerungssignal kann also z.B. einen der Recheneinheit vorgeschalteten, regelbaren Eingangsverstärker verstellen, d.h. den Verstärkungsfaktor für die Signale des Bildsensors anpassen. Alternativ kann das Aussteuerungssignal einen der Recheneinheit nachgeschalteten, regelbaren Ausgangsverstärker für die Lichtquelle verstellen, um so die Beleuchtungsstärke anzupassen. Auf diese Weise kann auch bei stark unterschiedlich reflektierenden Oberflächen stets eine im Wesentlichen gleichbleibende Gesamtintensität aufrechterhalten und somit die Dynamik des Systems verbessert werden.

Das Aussteuerungssignal wird also nicht nur gegebenenfalls zur Pegelanpassung, sondern auch zum Auslesen von auf die Oberfläche aufgebrachten Codemustern verwendet. Die aus den Codemustern ausgelesene Information kann auf unterschiedliche Weise weiterverarbeitet werden und wichtige Angaben zum Zustand des Gesamtsystems liefern. Von besonderem Vorteil ist hierbei, dass zum Bereitstellen der zusätzlichen Information keine separaten Einrichtungen und keine entsprechenden Kalibrierungsmaßnahmen erforderlich sind, sondern dass ein und dieselbe optische Abtasteinheit sowohl den Verfahrweg bestimmt als auch graphische Codes liest. Es ist somit im Gegensatz zu bekannten Systemen nur ein Sender und ein Empfänger erforderlich, sodass die Vorrichtung besonders kompakt und kostengünstig ist.

Eine Bestimmung des Verfahrwegs durch Auswertung der zeitlichen Änderung von Lichtintensitätsmustern erfolgt auch bei elektronischen Zeigegeräten, wie z.B. optischen Mäusen für Computer. Das dabei angewandte Prinzip wird auch als "optischer Fluss" bezeichnet. Weiterhin sind Mäuse für Computer bekannt, die mit einem so genannten Trackball zur Bestimmung des Verfahrwegs und zusätzlich mit einem optischen Codeleser, z.B. einem Strichcodeleser, ausgestattet sind. Derartige Mäuse mit Trackball und Codeleser sind in den Druckschriften DE 197 44 441 A1, US 5 448 050 und US 5 633 489 offenbart. Bei diesen Systemen sind stets zwei eigenständige und vollständig voneinander getrennt arbeitende Erfassungssysteme notwendig. Dies erfordert nicht nur einen vergleichsweise großen Bauraum, sondern ist auch mit beträchtlichen Herstellungskosten verbunden. Demgegenüber ermöglicht die erfindungsgemäß vorgesehene gleichzeitige Nutzung der optischen Abtasteinheit zur Bestimmung des Verfahrwegs und zum Lesen von Codes eine platzsparende und kostengünstige Ausführung eines Positionsgebers.

Weiterbildungen der Erfindung sind den abhängigen Ansprüchen, der Beschreibung sowie den beigefügten Figuren angegeben.

Vorzugsweise ist die Auswertungseinrichtung dazu ausgebildet, zum Erkennen des graphischen Codemusters aus dem zeitlichen Verlauf des Aussteuerungssignals während einer Bewegung der optischen Abtasteinheit relativ zu der Oberfläche einen durch das Codemuster gegebenen örtlichen Verlauf des Reflexionsgrads der Oberfläche abzuleiten. Mit anderen Worten werden die zeitlichen Schwankungen des Aussteuerungssignals, welche ja die unterschiedlich reflektierenden Bereiche eines abgetasteten graphischen Codemusters repräsentieren, durch die Auswertungseinrichtung direkt als Codemuster interpretiert. Es sind somit insbesondere keine komplexen und aufwändigen Auslesealgorithmen notwendig, sodass auch die entsprechenden kostspieligen Elektronikmodule einschließlich der entsprechenden Verschaltungen eingespart werden können.

Vorzugsweise umfasst die optische Abtasteinheit eine Lichtquelle zum Beleuchten der Oberfläche, insbesondere eine Leuchtdiode oder eine Laserdiode. Durch die Beleuchtung der Oberfläche werden auf der Oberfläche vorhandene Strukturen besser erkennbar und können demzufolge zuverlässiger aufgelöst werden. Die spektrale Strahlungsstärke der Lichtquelle kann in besonderer Weise auf den Bildsensor und/oder an die Art der Oberfläche angepasst sein. Weiterhin kann zum Herausfiltern von Störlicht ein schmalbandiger Bandpassfilter zwischen der Oberfläche und dem Bildsensor angeordnet sein.

Die Auswertungseinrichtung kann in die elektronische Recheneinheit integriert sein. Bei dieser Ausgestaltung ist der beanspruchte Bauraum minimiert.

Alternativ kann die Auswertungseinrichtung als weitere elektronische Recheneinheit ausgeführt sein. Dies bietet den Vorteil, dass zur Bestimmung des Verfahrwegs eine kommerziell erhältliche elektronische Recheneinheit verwendet werden kann, welche lediglich mit einer zusätzlichen elektronischen Recheneinheit zu verbinden ist.

Prinzipiell ist darauf hinzuweisen, dass das Aussteuerungssignal mit der insgesamt von der Oberfläche reflektierten Lichtintensität korreliert, also nicht auf einzelne Bildelemente des Bildsensors bezogen ist, sondern z.B. ein Mittelwertsignal, Summensignal oder Integralsignal bezüglich des gesamten Bildsensors umfassen kann.

Die Auswertungseinrichtung kann weiterhin dazu ausgebildet sein, aus dem Codemuster zumindest einen die Position der optischen Abtasteinheit relativ zu einem Bezugspunkt der Oberfläche repräsentierenden Positionswert auszulesen. Der Positionswert kann im Rahmen der Bestimmung des Verfahrwegs als absoluter Referenzwert, z.B. in Form eines Nullpunkts, verwendet werden, um so eine absolute Positionsbestimmung zu ermöglichen. Auf der Oberfläche können zu diesem Zweck in regelmäßigen Abständen Positionsmarken in Form von graphischen Codemustern aufgebracht sein.

Weiterhin kann die Auswertungseinrichtung dazu ausgebildet sein, aus dem Codemuster eine Information auszulesen, welche eine Eigenschaft eines durch die Position des Codemusters definierten Bezugspunkts auf der Oberfläche beschreibt, insbesondere eine Produktidentifizierungs-Information. Beispielsweise können die Codemuster in einem Warenlager vorgesehen sein und die an der betreffenden Stelle gelagerten Waren oder Produkte kennzeichnen. Bei der Eigenschaft des Bezugspunkts kann es sich jedoch auch um andere abstrakte Informationen handeln. Beispielsweise könnte das Codemuster angeben, ob eine Verzweigung der Verfahrstrecke bevorsteht.

Gemäß einer bevorzugten Ausgestaltung der Erfindung ist die Auswertungseinrichtung dazu ausgebildet, einen Strichcode zu erkennen. Derartige Codes sind durch optisches Abtasten oder Scannen leicht erkennbar, da sie speziell für eine gute Erkennbarkeit entwickelt wurden. Sofern eine mehrfache Abtastung an unterschiedlichen Stellen erfolgt, beispielsweise eine zeilenweise Abtastung, kann auch ein Matrixcode ausgelesen werden.

Eine erfindungsgemäße Vorrichtung kann wenigstens ein zum Aufbringen auf eine Oberfläche ausgebildetes Informationselement umfassen, welches wenigstens ein durch die Auswertungseinrichtung erkennbares graphisches Codemuster umfasst. Das Informationselement kann z.B. einen dünnen, vorzugsweise flexiblen Träger umfassen, auf dessen Oberseite das graphische Codemuster aufgedruckt ist. Im Rahmen der Inbetriebnahme des Systems wird der Träger mit seiner Unterseite an der gewünschten Stelle an der Oberfläche angebracht, beispielsweise auf diese aufgeklebt.

Die Erfindung wird nachfolgend beispielhaft unter Bezugnahme auf die Zeichnungen beschrieben.
- Fig. 1: ist eine vereinfachte, teilweise aufgeschnittene Seitenansicht einer Vorrichtung zur Positionsbestimmung für eine erfindungsgemäße Fördereinrichtung.
- Fig. 2: ist eine Teildarstellung der Vorrichtung gemäß Fig. 1, welche die Regelung einer Eingangsverstärkung einer Recheneinheit der Vorrichtung gemäß Fig. 1 zeigt.
- Fig. 3: ist eine Teildarstellung der Vorrichtung gemäß Fig. 1, welche als Alternative zu der Variante gemäß Fig. 2 die Regelung einer Leistung einer Lichtquelle der Vorrichtung gemäß Fig. 1 zeigt.
- Fig. 4: ist eine vereinfachte Seitenansicht eines nicht zur Erfindung gehörenden Transportsystems.
- Fig. 5: ist eine vereinfachte Draufsicht auf eine Fördereinrichtung gemäß einer Ausführungsform der Erfindung.

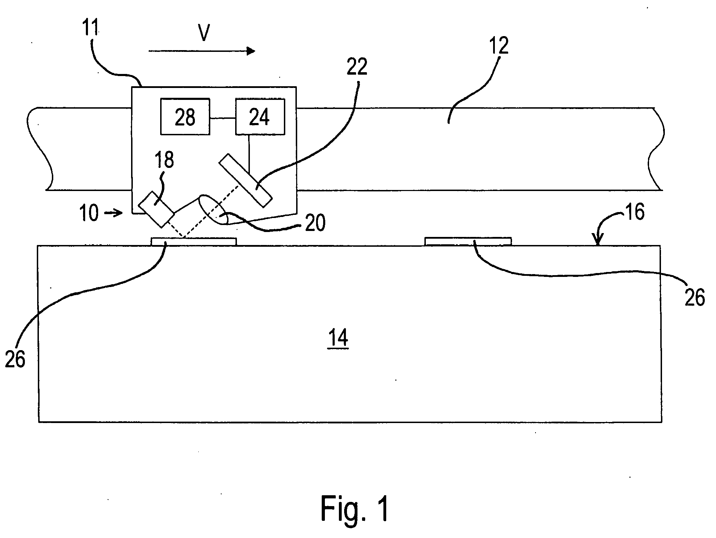

Gemäß Fig. 1 umfasst die gezeigte Ausführungsform der Vorrichtung zur Positionsbestimmung ein Gehäuse 11, an dessen Unterseite eine optische Abtasteinheit 10 vorgesehen ist. Das Gehäuse 11 ist entlang einer Verfahrrichtung V auf einer Führungsschiene 12 verschiebbar. Unterhalb der optischen Abtasteinheit 10 befindet sich ein Bauteil 14 mit einer ebenen Oberfläche 16. Eine Lichtquelle 18 der optischen Abtasteinheit 10, bei der es sich insbesondere um eine Leuchtdiode oder eine Laserdiode handeln kann, ist derart angeordnet, dass sie einen Abschnitt der Oberfläche 16 schräg von oben beleuchtet. Von der Oberfläche 16 reflektiertes Licht wird von einer Abbildungsoptik 20 auf einen Bildsensor 22 fokussiert. Der Bildsensor 22 ist im Inneren des Gehäuses 11 angeordnet und vorzugsweise als CCD-Sensor oder CMOS-Sensor ausgebildet, welcher pixelweise Lichtintensitätsmuster erfasst und entsprechende elektrische Signale ausgibt.

Dem Bildsensor 22 ist eine elektronische Recheneinheit 24 zugeordnet, welche ebenfalls in dem Gehäuse 11 angeordnet ist und welche dazu ausgebildet ist, aus einem Unterschied zwischen zeitlich nacheinander erfassten Lichtintensitätsmustern einen zurückgelegten Verfahrweg und/oder eine Verfahrgeschwindigkeit der optischen Abtasteinheit 10 relativ zu der Oberfläche 16 zu bestimmen. Vorzugsweise arbeitet die elektronische Recheneinheit 24 nach dem Prinzip des optischen Flusses, wie es grundsätzlich auch bei optischen Mäusen zur Anwendung kommt.

An mehreren Stellen der Oberfläche 16 sind graphische Codemuster 26 vorgesehen, welche von der optischen Abtasteinheit 10 abgetastet oder gescannt werden, wenn sich das Gehäuse 11 in der Verfahrrichtung V an diesen vorbeibewegt. Jedes Mal wenn sich die optische Abtasteinheit 10 über eines der graphischen Codemuster 26 hinweg bewegt, wird das entsprechende Codemuster 26 als solches erkannt und eine in ihm enthaltene Information wird ausgelesen. Zu diesem Zweck ist eine elektronische Auswertungseinrichtung 28 in dem Gehäuse 11 untergebracht, welche mit der elektronischen Recheneinheit 24 kommuniziert und welche in der Lage ist, die Codemuster 26 zu dekodieren und die enthaltene Information auszugeben. Bei einem Ausführungsbeispiel umfasst die Information einen Positionswert, welcher als Bezugspunkt oder Nullpunkt für eine absolute Positionsbestimmung herangezogen wird. Vorzugsweise enthalten die graphischen Codemuster 26 einen Strichcode. Grundsätzlich könnte das Gehäuse 11 auch in zwei Richtungen oder flächig verschiebbar sein.

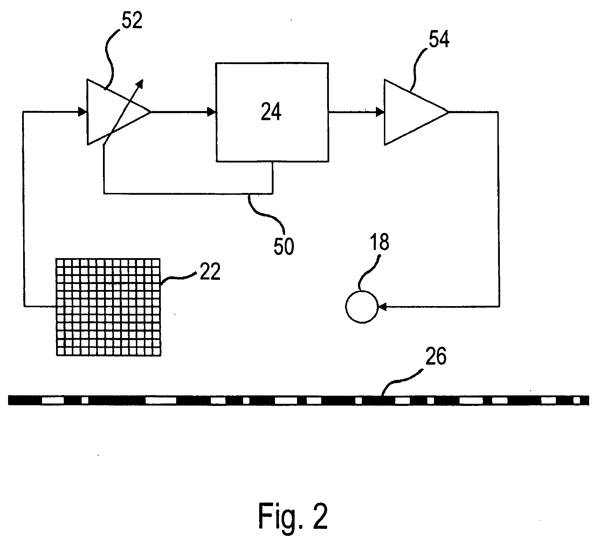

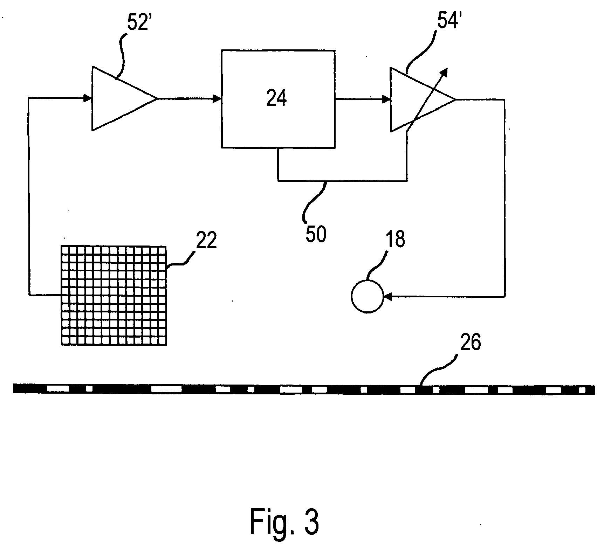

Wie im Weiteren unter Bezugnahme auf Fig. 2 und 3 erläutert wird, erfolgt das Erkennen der Codemuster 26 sowie das Auslesen der Information anhand eines Aussteuerungssignals 50, welches von der Recheneinheit 24 erzeugt wird und als Summen- oder Mittelwertsignal mit der Intensität des insgesamt von der Oberfläche 16 reflektierten Lichts korreliert. Grundsätzlich könnte das Aussteuerungssignal 50 auch von einer separaten elektronischen Recheneinheit erzeugt werden.

Grundsätzlich kann das Aussteuerungssignal 50 als Stellsignal zur Regelung eines Verstärkungsfaktors herangezogen werden. Konkret kann das Aussteuerungssignal 50 gemäß Fig. 2 einem an der Eingangsseite der Recheneinheit 24 vorgesehenen, regelbaren Eingangsverstärker 52 zugeführt werden, um die Intensitätssignale des Bildsensors 22 anzupassen. Ein an der Ausgangsseite der Recheneinheit 24 vorgesehener Ausgangsverstärker 54 zur Anpassung der Leistung der Lichtquelle 18 bleibt hierbei unbeeinflusst. Alternativ kann das Aussteuerungssignal 50 gemäß Fig. 3 einem an der Ausgangsseite der Recheneinheit 24 vorgesehenen, regelbaren Ausgangsverstärker 54' zugeführt werden, um Leistung der Lichtquelle 18 anzupassen. Ein an der Eingangsseite der Recheneinheit 24 vorgesehener Eingangsverstärker 52' zur Anpassung der Intensitätssignale des Bildsensors 22 bleibt hierbei unbeeinflusst. Auf diese Weise kann auch bei stark unterschiedlich reflektierenden Oberflächen stets eine im Wesentlichen gleichbleibende Gesamtintensität aufrechterhalten und somit die Dynamik des Systems verbessert werden.

Gleichzeitig nutzt die Auswertungseinrichtung 28 (Fig. 1) das Aussteuerungssignal 50 zum Erkennen des graphischen Codemusters 26, indem sie aus dem zeitlichen Verlauf des Aussteuerungssignals 50 einen durch das Codemuster 26 gegebenen örtlichen Verlauf des Reflexionsgrads der Oberfläche 16 ableitet.

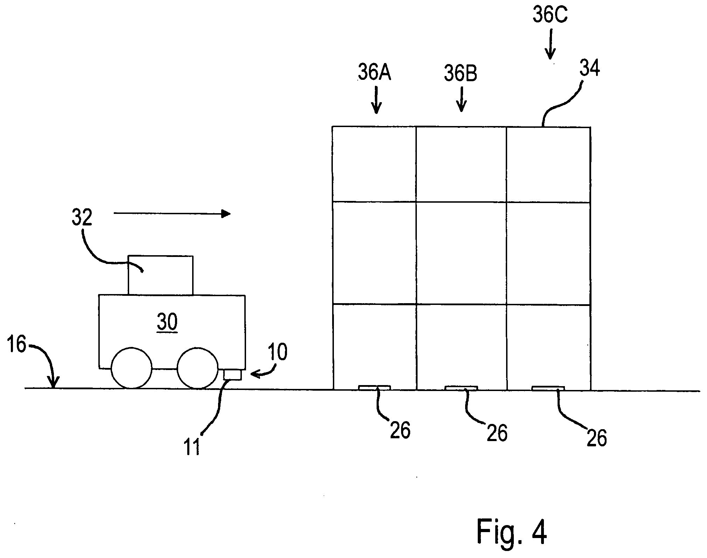

In Fig. 4 ist ein nicht zur Erfindung gehörendes Transportsystem dargestellt. Bei diesem Transportsystem ist die optische Abtasteinheit 10 nicht an einer Führungsschiene angebracht, sondern an der Unterseite eines führerlosen Fahrzeugs 30, mittels welchem Produkte 32 zu einem Hochregal 34 transportiert werden. Die optische Abtasteinheit 10 ist dabei derart an dem Fahrzeug 30 angebracht, dass sie sich dicht über der Oberfläche 16 des Bodens befindet. Vor jeder Spalte 36A, 36B, 36C des Hochregals 34 ist ein graphisches Codemuster 26 auf den Boden aufgebracht, in welchem eine Produktidentifizierungs-Information codiert ist. Das führerlose Fahrzeug 30 wird mithilfe der optischen Abtasteinheit 10 gesteuert. Zu diesem Zweck wird einerseits der zurückgelegte Verfahrweg bestimmt und andererseits wird die Produktidentifizierungs-Information aus dem Codemuster 26 ausgelesen, wenn die optische Abtasteinheit 10 dieses abtastet. Da in einer dem Fahrzeug 30 zugeordneten, nicht dargestellten elektronischen Speichereinheit weiterhin eine Information über das aktuell transportierte Produkt 32 abgelegt ist, kann das Fahrzeug 30 das Produkt 32 bis zu derjenigen Spalte 36A, 36B, 36C des Hochregals 34 befördern, bei welcher die Produktidentifizierungs-Information des Codemusters 26 mit der im Speicher abgelegten Produktinformation übereinstimmt. Eine ebenfalls nicht dargestellte Handhabungsvorrichtung des Fahrzeugs 30 oder des Hochregals 34 setzt dann das Produkt 32 von dem Fahrzeug 30 in die korrekte Spalte 36A, 36B, 36C des Hochregals 34 um. Das Entnehmen von Produkten 32 aus dem Hochregal 34 erfolgt in analoger Weise.

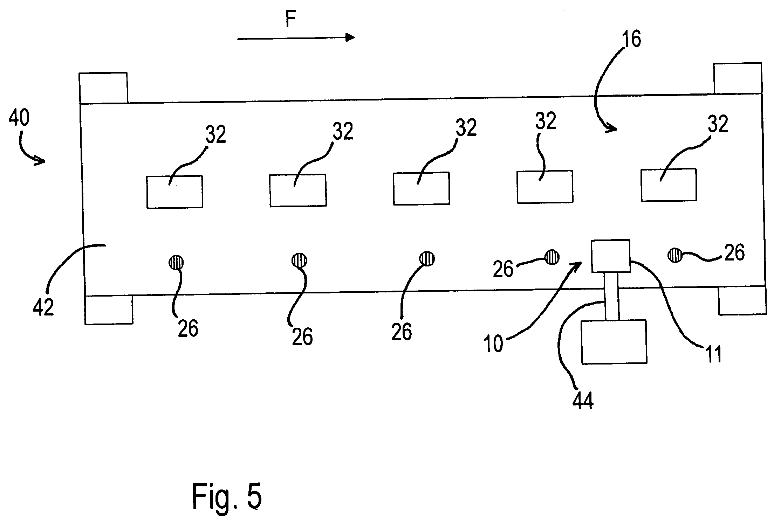

Fig. 5 zeigt eine Ausführungsform der Erfindung, bei welcher die optische Abtasteinheit 10 einem Bandförderer 40 zugeordnet ist. Der Bandförderer 40 fördert auf einem Förderband 42 Produkte 32 entlang einer Förderrichtung F. An einem ortsfesten Träger 44 neben dem Bandförderer 40 ist eine optische Abtasteinheit 10 derart angebracht, dass sie sich dicht über der Auflagefläche 16 des Förderbands 42 bewegt. Auf dem Förderband 42 sind weiterhin in regelmäßigen Abständen graphische Codemuster 26 aufgebracht, welche während des Förderns von Produkten 32 durch die ortsfeste optische Abtasteinheit 10 abgetastet werden. Die optische Abtasteinheit 10 erkennt anhand der Codemuster 26 die Art eines geförderten Produkts 32 und zusätzlich den Ort des Produkts 32 innerhalb der Auflagefläche 16 des Förderbands 42 und gibt ein dementsprechendes Signal an eine nicht dargestellte Steuereinrichtung des Bandförderers 40 aus. Das Signal wird von der Steuereinrichtung verarbeitet und es wird z.B. anhand des Signals eine Handhabungsvorrichtung zum Entnehmen der Produkte von dem Förderband 42 angesteuert.

Insgesamt ermöglicht die Erfindung ein zuverlässiges Bereitstellen von Positionswerten einschließlich wichtiger Zusatzangaben, wobei das entsprechende Messgerät besonders kompakt gestaltet sein kann und kostengünstig in der Herstellung ist.

### Bezugszeichenliste

- 10: Optische Abtasteinheit
- 11: Gehäuse
- 12: Führungsschiene
- 14: Bauteil
- 16: Oberfläche
- 18: Lichtquelle
- 20: Abbildungsoptik
- 22: Bildsensor
- 24: Elektronische Recheneinheit
- 26: Graphisches Codemuster
- 28: Auswertungseinrichtung
- 30: Führerloses Fahrzeug
- 32: Produkt
- 34: Hochregal
- 36A, 36B, 36C: Spalte
- 40: Bandförderer
- 42: Förderband
- 44: Träger
- 50: Aussteuerungssignal
- 52, 52': Eingangsverstärker
- 54, 54': Ausgangsverstärker
- V: Verfahrrichtung
- F: Förderrichtung

## Patentansprüche

1. Fördereinrichtung (40) zum Befördern von Gütern (32) auf einer Transportoberfläche (16), wobei an einem ortsfesten Träger (44) der Fördereinrichtung (40) eine Vorrichtung zur Positionsbestimmung vorgesehen ist und wenigstens ein Codemuster (26) derart auf die bewegliche Transportoberfläche (16) aufgebracht ist, dass es bei einem Bewegen der Transportoberfläche (16) von der optischen Abtasteinheit (10) abgetastet wird, wobei die Vorrichtung zur Positionsbestimmung umfasst:
eine relativ zu einer Oberfläche (16) zu bewegende optische Abtasteinheit (10), die einen Bildsensor (22) zum Erfassen von Lichtintensitätsmustern von Licht, das von der Oberfläche (16) reflektiert wird, und vorzugsweise eine Abbildungsoptik (20) zum Fokussieren des Lichts auf den Bildsensor (22) umfasst, und
eine dem Bildsensor (22) zugeordnete elektronische Recheneinheit (24), die dazu ausgebildet ist, aus einem Unterschied zwischen zeitlich nacheinander erfassten Lichtintensitätsmustern einen zurückgelegten Verfahrweg und/oder eine Verfahrgeschwindigkeit der optischen Abtasteinheit (10) relativ zu der Oberfläche (16) zu bestimmen,
**dadurch gekennzeichnet, dass**
die oder eine weitere Recheneinheit (24) dazu ausgebildet ist, ein Aussteuerungssignal (50) zu erzeugen, welches mit der Intensität des von der Oberfläche (16) reflektierten Lichts korreliert,
wobei dem Bildsensor (22) eine Auswertungseinrichtung (28) zugeordnet ist, die dazu ausgebildet ist, anhand des Aussteuerungssignals (50) ein auf der Oberfläche (16) befindliches graphisches Codemuster (26) zu erkennen und eine Information aus dem Codemuster (26) auszulesen, wobei ein Regler vorgesehen ist, welcher das Aussteuerungssignal (50) als Stellsignal zur Regelung eines Verstärkungsfaktors eines Eingangsverstärkers (52) der Recheneinheit (24) der optischen Abtasteinheit (10) oder zur Regelung eines Verstärkungsfaktors eines die Leistung einer Lichtquelle (18) der optischen Abtasteinheit (10) anpassenden Ausgangsverstärkers (54) verwendet.

2. Vorrichtung nach Anspruch 1,
**dadurch gekennzeichnet, dass** die Auswertungseinrichtung (28) dazu ausgebildet ist, zum Erkennen des graphischen Codemusters (26) aus dem zeitlichen Verlauf des Aussteuerungssignals (50) während einer Bewegung der optischen Abtasteinheit (10) relativ zu der Oberfläche (16) einen durch das Codemuster (26) gegebenen örtlichen Verlauf des Reflexionsgrads der Oberfläche (16) abzuleiten.

3. Vorrichtung nach zumindest einem der vorstehenden Ansprüche,
**dadurch gekennzeichnet, dass** die optische Abtasteinheit (10) eine Lichtquelle (18) zum Beleuchten der Oberfläche (16), insbesondere eine Leuchtdiode oder eine Laserdiode, umfasst.

4. Vorrichtung nach zumindest einem der vorstehenden Ansprüche,
**dadurch gekennzeichnet, dass** die Auswertungseinrichtung in die elektronische Recheneinheit integriert ist.

5. Vorrichtung nach einem der Ansprüche 1 bis 3,
**dadurch gekennzeichnet, dass** die Auswertungseinrichtung (28) als weitere elektronische Recheneinheit ausgeführt ist.

6. Vorrichtung nach zumindest einem der vorstehenden Ansprüche,
**dadurch gekennzeichnet, dass** die Auswertungseinrichtung (28) dazu ausgebildet ist, aus dem Codemuster (26) zumindest einen die Position der optischen Abtasteinheit (10) relativ zu einem Bezugspunkt der Oberfläche (16) repräsentierenden Positionswert auszulesen.

7. Vorrichtung nach zumindest einem der vorstehenden Ansprüche,
**dadurch gekennzeichnet, dass** die Auswertungseinrichtung (28) dazu ausgebildet ist, aus dem Codemuster (26) eine Information auszulesen, welche eine Eigenschaft eines durch die Position des Codemusters (26) definierten Bezugspunkts auf der Oberfläche (16) beschreibt, insbesondere eine Produktidentifizierungs-Information.

8. Vorrichtung nach zumindest einem der vorstehenden Ansprüche,
**dadurch gekennzeichnet, dass** die Auswertungseinrichtung (28) dazu ausgebildet ist, einen Strichcode zu erkennen.

9. Vorrichtung nach zumindest einem der vorstehenden Ansprüche,
**gekennzeichnet durch**
wenigstens ein zum Aufbringen auf eine Oberfläche ausgebildetes Informationselement, welches wenigstens ein **durch** die Auswertungseinrichtung (28) erkennbares graphisches Codemuster (26) umfasst.

## Claims

1. A conveying device (40) for conveying goods (32) on a transport surface (16), wherein an apparatus for position determination is provided at a stationary carrier (44) of the conveying device (40) and at least one code pattern (26) is applied to the moving transport surface (16) such that it is scanned by the optical scanning unit (10) on a movement of the transport surface (16), wherein the apparatus for position determination comprises:
an optical scanning unit (10) which is to be moved relative to a surface (16), the optical scanning unit including an image sensor (22) for detecting light intensity patterns of light which is reflected by the surface (16) and preferably including an imaging optics (20) for focusing the light onto the image sensor (22); and
an electronic processing unit (24) which is associated with the image sensor (22) and which is configured to determine a traveled movement path and/or a movement speed of the optical scanning unit (10) relative to the surface (16) from a difference between light intensity patterns detected after one another in time,
**characterized in that**
the or a further processing unit (24) is configured to produce an intensity correlated signal (50) which correlates with the intensity of the light reflected by the surface (16),
with an evaluation device (28) being associated with the image sensor (22) and being configured to recognize a graphical code pattern (26) located on the surface (16) with respect to the intensity correlated signal (50) and to read out information from the code pattern (26), with a regulator being provided which uses the intensity correlated signal (50) as an adjustment signal for regulating an amplification factor of an input amplifier (52) of the processing unit (24) of the optical scanning unit (10) or for regulating an amplification factor of an output amplifier (54) adapting the power of a light source (18) of the optical scanning unit (10).

2. An apparatus in accordance with claim 1,
**characterized in that**
the evaluation device (28) is configured to derive a spatial development of the degree of reflection of the surface (16) given by the code pattern (26) for the recognition of the graphical code pattern (26) from the time development of the intensity correlated signal (50) during a movement of the optical scanning unit (20) relative to the surface (16).

3. An apparatus in accordance with at least one of the preceding claims,
**characterized in that**
the optical scanning unit (10) includes a light source (18) for illuminating the surface (16), in particular a light-emitting diode or a laser diode.

4. An apparatus in accordance with at least one of the preceding claims,
**characterized in that**
the evaluation device is integrated into the electronic processing unit.

5. An apparatus in accordance with any one of the claims 1 to 3,
**characterized in that**
the evaluation device (28) is designed as a further electronic processing unit.

6. An apparatus in accordance with at least one of the preceding claims,
**characterized in that**
the evaluation device (28) is configured to read out at least one position value representing the position of the optical scanning unit (10) relative to a reference point of the surface (16) from the code pattern (26).

7. An apparatus in accordance with at least one of the preceding claims,
**characterized in that**
the evaluation device (28) is configured to read out information from the code reader (26) which describes a property of a reference point defined by the position of the code pattern (26) on the surface (16), in particular product identification information.

8. An apparatus in accordance with at least one of the preceding claims,
**characterized in that**
the evaluation device (28) is configured to recognize a barcode.

9. An apparatus in accordance with at least one of the preceding claims,
**characterized by**
at least one information element which is configured for attachment to a surface and which includes a graphical code pattern (26) recognizable by the evaluation device (28).

## Revendications

1. Dispositif de convoyage (40) pour convoyer des marchandises (32) sur une surface de transport (16), un dispositif de détermination de position étant prévu sur un support (44) stationnaire du dispositif de convoyage (40) et au moins un motif de code (26) étant appliqué de telle sorte sur la surface de transport (16) mobile que lors d'un mouvement de la surface de transport (16), íl est balayé par une unité de balayage optique (10), le dispositif de détermination de position comprenant :
une unité de balayage optique (10) à déplacer par rapport à une surface (16), qui comprend un capteur d'image (22) pour détecter des motifs d'intensité lumineuse de la lumière qui est réfléchie par la surface (16) et de préférence une optique d'imagerie (20) pour focaliser la lumière sur le capteur d'image (22), et
une unité de calcul (24) électrique associée au capteur d'image (22), qui est réalisée pour déterminer à partir d'une différence entre des motifs d'intensité de lumière détectés les uns après les autres dans le temps, un trajet de déplacement parcouru et/ou une vitesse de déplacement de l'unité de balayage optique (10) par rapport à la surface (16),
**caractérisé en ce que**
l'unité de calcul (24) ou une autre unité de calcul est réalisée pour engendrer un signal de modulation (50) qui est en corrélation avec l'intensité de la lumière réfléchie par la surface (16),
au capteur d'image (22) est associé un dispositif d'évaluation (28) qui est réalisé pour reconnaître à l'aide du signal de modulation (50) un motif de code (26) graphique se trouvant sur la surface (16) et pour lire une information à partir du motif de code (26),
un régulateur étant prévu, lequel utilise le signal de modulation (50) en tant que signal de réglage pour régler un facteur d'amplification d'un amplificateur d'entrée (52) de l'unité de calcul (24) de l'unité de balayage optique (10) ou pour régler un facteur d'amplification d'un amplificateur de sortie (54) adaptant la puissance d'une source lumineuse (18) de l'unité de balayage optique (10).

2. Dispositif selon la revendication 1,
**caractérisé en ce que**
le dispositif d'évaluation (28) est réalisé pour dériver un déroulement local du degré de réflexion de la surface (16), donné par le motif de code (26), afin de reconnaître le motif de code (26) graphique à partir du déroulement dans le temps du signal de modulation (50) pendant un mouvement de l'unité de balayage optique (10) par rapport à la surface (16).

3. Dispositif selon au moins l'une des revendications précédentes,
**caractérisé en ce que**
l'unité de balayage optique (10) comprend une source de lumière (18) pour éclairer la surface (16), en particulier une diode électroluminescente ou une diode laser.

4. Dispositif selon au moins l'une des revendications précédentes,
**caractérisé en ce que**
le dispositif d'évaluation est intégré dans l'unité de calcul électronique.

5. Dispositif selon moins l'une des revendications 1 à 3,
**caractérisé en ce que**
le dispositif d'évaluation (28) est réalisé en tant qu'autre unité de calcul électronique.

6. Dispositif selon au moins l'une des revendications précédentes,
**caractérisé en ce que**
le dispositif d'évaluation (28) est réalisé pour lire à partir du motif de code (26) au moins une valeur de position représentant la position de l'unité de balayage optique (10) par rapport à un point de référence de la surface (16).

7. Dispositif selon au moins l'une des revendications précédentes,
**caractérisé en ce que**
le dispositif d'évaluation (28) est réalisé pour lire depuis le motif de code (26) une information qui décrit une propriété d'un point de référence défini par la position du motif de code (26) sur la surface (16), en particulier une information sur l'identification d'un produit.

8. Dispositif selon au moins l'une des revendications précédentes,
**caractérisé en ce que**
le dispositif d'évaluation (28) est réalisé pour reconnaître un code-barres.

9. Dispositif selon au moins l'une des revendications précédentes,
**caractérisé par**
au moins un élément d'information destiné à être appliqué sur une surface, lequel comprend au moins un motif de code (26) graphique qui peut être reconnu par le dispositif d'évaluation (28).
